# EUROPÄISCHE PATENTSCHRIFT

(11) **EP 3 193 111 B1**
(45) Veröffentlichungstag und Bekanntmachung des Hinweises auf die Patenterteilung: **25.11.2020**
(21) Anmeldenummer: 16204912.6
(22) Anmeldetag: 19.12.2016
(51) Int. Cl.: A47J 47/00, F25D 25/00

(54) **LEBENSMITTEL-AUFNAHMEBEHÄLTER SOWIE HAUSHALTSKÄLTEGERÄT MIT EINEM LEBENSMITTEL-AUFNAHMEBEHÄLTER**
FOOD CONTAINER AND HOUSEHOLD REFRIGERATION DEVICE WITH A FOOD CONTAINER
RÉCIPIENT DE STOCKAGE POUR PRODUIT ALIMENTAIRE ET RÉFRIGÉRATEUR COMPRENANT UN RÉCIPIENT DE STOCKAGE POUR PRODUIT ALIMENTAIRE

(30) Priorität: 14.01.2016 DE 102016200330
(43) Veröffentlichungstag der Anmeldung: 19.07.2017
(73) Patentinhaber: BSH Hausgeräte GmbH, 81739 München (DE)
(72) Erfinder: Eicher, Max, 80689 München (DE); Bauer, Maximilian, 81669 München (DE); Försterling, Klaus, 83123 Amerang (DE); Hartwein, Christine, 85405 Nandlstadt (DE)

(56) Entgegenhaltungen:
- DE-A1- 10 341 077
- FR-A1- 2 360 473
- JP-U- S6 158 494
- US-A- 4 941 401

## Beschreibung

Die Erfindung betrifft einen Lebensmittel-Aufnahmebehälter mit einer Aufnahmeschale, einem dazu separaten Deckel und einem dazu separaten Einsatz, der zum Einsetzen in die Aufnahmeschale ausgebildet ist, und welcher einen Boden aufweist, auf welchen ein Lebensmittel auflegbar ist. Des Weiteren betrifft die Erfindung auch ein Haushaltskältegerät mit zumindest einem derartigen Lebensmittel-Aufnahmebehälter.

Bei Haushaltskältegeräten ist es bekannt, dass in einem Aufnahmeraum für Lebensmittel, beispielsweise einem Gefrierraum oder einem Kühlraum, eine daraus entnehmbare und wieder einschiebbare Schublade enthalten ist.

Darüber hinaus ist es bekannt, dass sogenannte Frischhaltebehälter angeordnet sein können, die mit einer spezifischen Verneblereinheit ausgebildet sind, durch welche dann in diesem geschlossenen Frischhaltebehälter eine zum restlichen Aufnahmeraum unterschiedliche Luftfeuchte eingestellt werden kann.

Darüber hinaus ist es aus der US 2015/0102717 A1 bekannt, dass ein Lebensmittel-Aufnahmebehälter eine Aufnahmeschale als äußere Wanne aufweist, in welcher mehrere kleinere Aufnahmeschalen eingesetzt werden können, in die jeweils ein Lebensmittel eingebracht werden kann. Darauf kann ein flexibler Deckel aufgebracht werden.

Bei der dortigen Ausgestaltung ist die Entnahme von kleineren Aufnahmeschalen aus der großen äußeren Aufnahmeschale schwierig. Diese kleineren Aufnahmeschalen sind zum einen in Mehrzahl passgenau gefächert darin in der größeren Aufnahmeschale angeordnet, darüber hinaus sind sie im oberen Bereich schwer greifbar.

Aus der US 4 941 401 A ist ein Aufnahmebehälter für Lebensmittel bekannt, der eine Aufnahmeschale, einen Deckel und einen in die Aufnahmeschale einsetzbaren Einsatz aufweist. Der plattenartige Einsatz weist an gegenüberliegenden Randseiten nach oben ragende Bügel auf.

Es ist Aufgabe der vorliegenden Erfindung, einen Lebensmittel-Aufnahmebehälter zu schaffen, welcher bezüglich der Handhabung und somit das Entnehmen und Einbringen des Einsatzes in die Aufnahmeschale verbessert ist.

Entsprechend soll auch ein Haushaltskältegerät mit einem derartigen Lebensmittel-Aufnahmebehälter geschaffen werden.

Ein erfindungsgemäßer Lebensmittel-Aufnahmebehälter umfasst eine Aufnahmeschale sowie einen dazu separaten Deckel. Darüber hinaus umfasst der Lebensmittel-Aufnahmebehälter einen separaten Einsatz. Dieser Einsatz ist zum Einsetzen in die Aufnahmeschale ausgebildet. Der Einsatz weist einen Boden auf, auf welchen ein Lebensmittel auflegbar ist. Ein wesentlicher Gedanke der Erfindung ist darin zu sehen, dass der Einsatz zumindest einen von seinem Boden nach oben ragenden Bügel aufweist. Dieser nach oben ragende Bügel weist an seinem dem Boden abgewandten oberen Ende einen Griff auf. Der Griff ist im in die Aufnahmeschale eingesetzten Zustand des Einsatzes über einen oberen Rand der Aufnahmeschale nach außen bzw. zur Seite hin überkragend angeordnet. Durch diese Ausgestaltung wird es ermöglicht, dass der Einsatz einfach und sicher von einem Nutzer ergriffen werden kann und somit das Einsetzen in die Aufnahmeschale als auch das Entnehmen aus der Aufnahmeschale verbessert ist. Ein schwieriges Greifen des Einsatzes am oberen Bereich und ein daraus resultierendes Abrutschen eines Nutzers mit seinen Fingern vom Einsatz ist dadurch verhindert. In besonderer Vorteilhaftigkeit ist es dadurch auch ermöglicht, dass ein Herunterfallen eines Lebensmittels, welches auf dem Boden des Einsatzes angeordnet ist, vermieden wird, wenn der Einsatz in die Aufnahmeschale eingesetzt wird oder aus dieser entnommen wird. Eine wesentlich nutzerfreundlichere Handhabung ist dadurch erreicht.

Insbesondere ist vorgesehen, dass der Bügel als umgedrehtes L geformt ist. Dadurch entstehen quasi horizontal nach außen orientierte Stege als Griffe, deren Greifen nochmals vereinfacht ist. Ein Nutzer kann somit durch sehr eingängige und intuitive Bewegungen unter diese Griffe, die durch den kurzen L-Schenkel der L-Form gebildet sind, greifen und dann entsprechend ein einfaches Heben des Einsatzes durchführen.

Da durch eine derartige spezifische Geometrie des Bügels auch eine möglichst große Kontaktfläche für die Finger eines Nutzers gegeben ist, ist ein sicheres Greifen und Handhaben des Einsatzes ermöglicht. Gerade dann, wenn ein Einsatz eingesetzt ist und mit einem darauf befindlichen Lebensmittel aus der Aufnahemschale herausgehoben werden soll, ist diese geometrische Ausgestaltung des Bügels besonders vorteilhaft. Die Finger lassen sich in dem Zusammenhang flach an die Unterseite des Griffs anlegen, so dass auch hier eine möglichst große Kontaktfläche zwischen den Fingern und dem Griff gegeben ist.

Es ist vorgesehen, dass der Boden des Einsatzes an einem Rand eine nach außen offene Einkerbung aufweist, und der Bügel von einem die Einkerbung begrenzenden Randabschnitt nach oben ragt. Durch dieses quasi nach innen Versetzen ist es dann auch erreicht, dass der am oberen Ende des Bügels dann nach außen ragende Griff bei einer Projektionsbetrachtung von oben auf den Einsatz auch nicht zu weit über die Ausmaße des Bodens nach außen übersteht. Unerwünscht große zur Seite abstehende Flügel in Form des Griffs können dadurch vermieden werden. Dadurch ist auch der Platzbedarf für den gesamten Lebensmittel-Aufnahmebehälter minimiert und es tritt kein unerwünschtes Überstehen von Einzelteilen, insbesondere dann von Griffen zur Seite hin auf. Dadurch kann auch ein unerwünschtes Anstoßen an anderen Bauteilen vermieden werden, wenn der Lebensmittel-Aufnahmebehälter in ein Haushaltsgerät eingesetzt ist. Ein Beschädigen des Griffs aufgrund eines daran Anstoßens ist damit deutlich reduziert und insbesondere verhindert. Darüber hinaus ist die Sperrigkeit des Lebensmittel-Aufnahmebehälters minimiert.

Es kann vorgesehen sein, dass sich der Griff in einer Erstreckungsrichtung, bemessen von einem Bügelstamm des Bügels bis zu einem dem Bügelstamm abgewandten freien Ende bzw. einer freien Kante des Griffs kleiner oder gleich der in dieser entsprechenden Richtung bemessenen Tiefe der Einkerbung des Bodens ist. Bei einer derartigen Ausgestaltung ist dann bei einer Projektionsbetrachtung des Einsatzes von oben der Griff nicht über die randseitigen Ausmaße des Bodens nach außen überstehend. Die oben genannten Vorteile werden dadurch nochmals verbessert.

Vorzugsweise ist vorgesehen, dass die Einkerbung trapezförmig ausgebildet ist, und der Randabschnitt ein Dach des Trapezes bildet. Dadurch ist der Bügel, insbesondere mit seinem Bügelstamm maximal weit nach innen versetzt angeordnet und es kann dann der Griff im Lichte der oben genannten vorteilhaften Ausführungen dennoch in maximaler Größe in dieser genannten Erstreckungsrichtung gebildet werden.

Es ist vorgesehen, dass die Aufnahmeschale an einer Seitenwand eine Einkerbung aufweist, die sich in Höhenrichtung betrachtet ausgehend von dem oberen Rand der Aufnahmeschale über zumindest 50 %, insbesondere zumindest 80 %, insbesondere zumindest 90 % der Höhe der Seitenwand erstreckt. Diese Ausgestaltung ist dahingehend besonders vorteilhaft, dass sie somit quasi eine dem Aufnahmevolumen der Aufnahmeschale zugewandte Einkerbung aufweist, die auch dann eine gewisse Führung für das Einsetzen und Entnehmen des Einsatzes bildet. Insbesondere ist in dieser Ausgestaltung nämlich vorgesehen, dass der Einsatz, insbesondere nur, in einer derartigen Orientierung in die Aufnahmeschale einsetzbar ist, dass die Einkerbung am Boden des Einsatzes mit der Einkerbung an der Seitenwand korrespondiert bzw. ein entsprechendes Ineinandergreifen vorliegt, so dass der Einsatz beim Einführen in die Aufnahmeschale als auch beim Herausheben durch diese ineinandergreifenden Einkerbungen geführt ist. Ein Verklemmen oder Verspreizen des Einsatzes ist dadurch vermieden und der Einsatz wird gerade beim Einsetzen zielsicher in seine Endposition verbracht. In vorteilhafterweise ist in dem Zusammenhang dann auch vorgesehen, dass der Einsatz in seiner in die Aufnahmeschale eingebrachten Endposition mit seiner an seinem Boden ausgebildeten Einkerbung immer noch in Eingriff mit der Einkerbung an der Seitenwand der Aufnahmeschale ist. Dadurch wird eine Positionssicherung des Einsatzes in seinem eingebrachten Endzustand erreicht. Ein unerwünschtes hin und her Wackeln oder Verkippen ist dadurch vermieden.

Es ist vorgesehen, dass die Einkerbung in der Seitenwand der Aufnahmeschale nach oben offen ausgebildet ist. Dadurch wird eine materialsparende Ausgestaltung ermöglicht.

In besonders vorteilhafter Weise ist vorgesehen, dass im eingesetzten Zustand des Einsatzes in die Aufnahmeschale der Griff die Einkerbung der Aufnahmeschale von oben übergreifend bzw. überdeckend angeordnet ist. Diese Vorteilhaftigkeit spiegelt sich dahingehend wieder, da somit durch die Einkerbung in der Seitenwand ein gewisser Muldenbereich gebildet ist, in den dann ein Nutzer eingreifen kann, so dass er von unten an den Griff bzw. an die Unterseite des Griffs direkt angreifen kann. Auch ergeben sich dadurch in weiterer Vorteilhaftigkeit Ausmaße des Griffs, die im Hinblick auf ein seitliches Überstehen über die Aufnahmeschale minimiert sind bzw. ein derartiges Überstehen grundsätzlich vermieden werden kann. Dadurch kann der gesamte Lebensmittel-Aufnahmebehälter gebildet werden und es ist kein Überstand von einzelnen kleinen, sperrigen Teilen zur Seite hin gegeben. In vorteilhafter Weise ist vorgesehen, dass der Deckel im auf der Aufnahmeschale aufgebrachten Zustand den Griff zumindest bereichsweise überlappt. Insbesondere liegt der Deckel auf dem Griff von oben auf. Einerseits wird somit der Griff von oben geschützt und abgedeckt, andererseits ist eine besondere Vorteilhaftigkeit darin zu sehen, dass bei einem Entnehmen des Einsatzes auch zugleich der Deckel mit abgehoben und entnommen werden kann. Denn durch das Greifen des Griffs von unten und dem Aufliegen des Deckels auf der Oberseite des Griffs sind diese beiden Komponenten quasi direkt aneinanderliegend und beim Entnehmen des Einsatzes wird dann auch zugleich der Deckel mit abgenommen.

Vorzugsweise ist vorgesehen, dass der Griff im eingesetzten Zustand des Einsatzes in die Aufnahmeschale auf dem oberen Rand der Aufnahmeschale aufsitzt. Dadurch ist die sichere Positionierung des Einsatzes zur Aufnahmeschale nochmals verbessert. Insbesondere ein Kippen oder unerwünschtes Verschieben kann dadurch nochmals verbessert verhindert werden.

Es kann vorgesehen sein, dass der Einsatz kontaktfrei mit dem Boden der Aufnahmeschale angeordnet ist. Gerade bei einer derartigen Ausgestaltung ist dann das Aufsitzen des Griffs auf dem oberen Rand vorteilhaft, da somit quasi der Einsatz vollständig nur in die Aufnahmeschale eingehängt ist und somit der Bügel mit seinem Griff multifunktionell gestaltet ist, da er somit dann auch als Aufhängung bzw. Halteelement dient.

Bei einer vorteilhaften Ausführung ist vorgesehen, dass der Deckel zumindest bereichsweise transparent ausgebildet ist. Dadurch ist es ermöglicht, dass in das Innere des Lebensmittel-Aufnahmebehälters geblickt werden kann, wenn dieser mit dem Deckel abgedeckt bzw. verschlossen ist und der gesamte Lebensmittel-Aufnahmebehälter in einem Lagerbereich im Haushaltskältegerät angeordnet ist. Der Lebensmittel-Aufnahmebehälter kann in dem Zusammenhang in einer Schublade, die in einem Aufnahmeraum des Haushaltskältegeräts angeordnet ist und in Tiefenrichtung des Haushaltskältegeräts hin und her geschoben werden kann, dann auch einfach von oben eingesehen werden. Eine vollständige Entnahme des Lebensmittel-Aufnahmebehälters ist dann nicht erforderlich, um erkennen zu können, welche Lebensmittel bzw. Lagergüter in dem Lebensmittel-Aufnahmebehälter enthalten sind.

In einer weiteren vorteilhaften Ausführung ist vorgesehen, dass die Aufnahmeschale zumindest teilweise bzw. zumindest bereichsweise transparent ausgebildet ist. Auch hier sind dann die oben genannten Vorteile vorhanden.

Vorzugsweise ist die Aufnahmeschale als einstückiges Kunststoffbauteil ausgebildet. Auch der Deckel kann insbesondere ein derartiges einstückiges Kunststoffbauteil sein. Vorzugsweise weist der Deckel an den mit der Aufnahmeschale in zusammengesetztem Zustand vorgesehenen Kontaktstellen ein Dichtelement oder mehrere Dichtelemente auf.

In einer vorteilhaften Ausführung ist vorgesehen, dass der Einsatz an dem Boden und an gegenüberliegenden Rändern des Bodens jeweils einen derartigen Bügel mit einem jeweiligen Griff aufweist. Dadurch ist die Handhabung besonders nutzerfreundlich, da der Einsatz mit beiden Händen gegriffen werden kann und gleichmäßig angehoben und abgesenkt werden kann.

Vorzugsweise weist der Einsatz nur diesen Boden und diese beiden Bügel auf. Insbesondere ist der Einsatz einstückig ausgebildet und vorzugsweise aus Kunststoff.

In vorteilhafterweise weist der Boden des Einsatzes zumindest bereichsweise Durchbrüche, beispielsweise in Form von Schlitzen und/oder runden und/oder eckigen und/oder ovalen Löchern auf. Zumindest dieser Bereich des Bodens mit diesen Durchbrüchen ist im eingesetzten Zustand des Einsatzes in die Aufnahmeschale beabstandet zu einem Boden der Aufnahmeschale angeordnet. Dies ist eine sehr vorteilhafte Ausführung, da somit der Lebensmittel-Aufnahmebehälter für Lebensmittel verwendet werden kann, die im Lagerzustand Medien verlieren bzw. abgeben. Insbesondere sind dies flüssige Medien, wie Wasser oder dergleichen. Gerade dadurch ist dann der Lebensmittel-Aufnahmebehälter auch als Abtaubehälter einsetzbar. Denn werden hier gefrorene Lagergüter dann in diesen Lebensmittel-Aufnahmebehälter eingebracht und tauen auf, kann das dann auftretende flüssige Medium durch die Durchbrüche im Boden nach unten laufen bzw. nach unten tropfen und kann dort gesammelt werden, ohne dass das Lebensmittel dann umfänglich selbst in diese abgegebene Flüssigkeit eintauchen würde. Hygienischen Anforderungen und auch Anforderungen bezüglich der Haltbarkeit des Lebensmittels kann dadurch besonders entsprochen werden.

Es ist insbesondre vorgesehen, dass der Bügel in seiner Längserstreckung in Höhenrichtung des Lebensmittel-Aufnahmebehälters längenstabil ausgebildet ist.

Es kann jedoch auch vorgesehen sein, dass der Bügel in seiner diesbezüglichen Länge veränderbar ist, insbesondere kontinuierlich oder diskret veränderbar ist. So kann hier der Bügel in konkreten Raststufen in seiner Länge verändert werden. Es kann jedoch auch eine diesbezüglich kontinuierliche Verstellung vorgesehen sein, beispielsweise durch eine teleskopartige Ausgestaltung eines derartigen Bügels. Durch diese Ausführung ist es ermöglicht, dass der Abstand des Bodens des Einsatzes zum Boden der Aufnahmeschale individuell eingestellt werden kann. Dadurch kann in derartigen Fällen, in denen ein größeres Lebensmittel eingebracht wird, der Boden nach unten abgesenkt werden oder, in Fällen in denen mit relativ viel abgebendem Medium, beispielsweise eine Flüssigkeit des eingelagerten Lebensmittels, gerechnet werden kann, beispielsweise bei einem Auftauen bzw. Abtauchen, ein entsprechender Abstand erreicht werden und somit auch ein entsprechendes Volumen in der Aufnahmeschale für dieses auftretende Medium bereitgestellt werde, ohne dass dann das entsprechende Lebensmittel in dieses Medium unerwünscht eintauchen würde.

Des Weiteren betrifft die Erfindung auch ein Haushaltskältegerät mit zumindest einem derartigen Lebensmittel-Aufnahmebehälter. Insbesondere kann der Lebensmittel-Aufnahmebehälter in eine Schale, die eine Schublade sein kann, eingebracht werden, wobei diese Schale in dem Aufnahmeraum des Haushaltskältegeräts angeordnet sein kann und entsprechend herausgezogen und hineingeschoben werden kann.

In vorteilhafter Weise ist vorgesehen, dass die Erfindung auch ein System mit mehreren Lebensmittel-Aufnahmebehältern aufweist, die gemäß einem erfindungsgemäßen Lebensmittel-Aufnahmebehälter ausgebildet sind oder gemäß einer vorteilhaften Ausgestaltung davon ausgebildet sind. Insbesondere sind diese mehreren separaten Lebensmittel-Aufnahmebehälter dann in ihrer Größe und somit in ihrem Aufnahmevolumen unterschiedlich gestaltet. Sie können in dem Zusammenhang so dimensioniert sein, dass sie ein Aufnahmevolumen einer Schublade bzw. einer Schale, in der sie eingebracht werden können, relativ passgenau ausfüllen. Dadurch wird ein das Volumen dieser Schublade maximal ausnutzendes Bestückungssystem bereitgestellt. Gerade bei dieser Ausführung ist es dann vorteilhaft, wenn die jeweiligen Deckel zumindest bereichsweise transparent sind, da dann einfach von oben in das jeweilige Innere dieser Lebensmittel-Aufnahmebehälter geblickt werden kann, ohne diese explizit entnehmen zu müssen. Darüber hinaus ist es gerade bei einer derartigen dichtest gepackten Anordnung von mehreren Lebensmittel-Aufnahmebehältern in einer derartigen Schublade durch die Erfindung besonders vorteilhaft, den jeweiligen Einsatz mit dem darauf aufgebrachten Deckel einfach anheben zu können und auf das Lebensmittel auch seitlich blicken zu können, ohne dass dann auch der gesamte Lebensmittel-Aufnahmebehälter oder die Aufnahmeschale mit entnommen werden müssten.

Mit Angaben "oben", "unten", "vorne", "hinten, "horizontal", "vertikal", "Tiefenrichtung", "Breitenrichtung", "Höhenrichtung" etc. sind die bei bestimmungsgemäßem Gebrauch und bestimmungsgemäßem Anordnen des Behälters und bei einem dann vor dem Behälter stehenden und in Richtung des Behälters blickenden Beobachter gegebenen Positionen und Orientierungen angegeben.

Ausführungsbeispiele der Erfindung werden nachfolgend anhand schematischer Zeichnungen näher erläutert. Es zeigen:
- Fig. 1: eine perspektivische Darstellung von Komponenten eines Ausführungsbeispiels eines erfindungsgemäßen Lebensmittel-Aufnahmebehälters in Nebeneinanderanordnung;
- Fig. 2: die Darstellung der Komponenten gemäß Fig. 1 in einer übereinander angeordneten Explosionsdarstellung;
- Fig. 3: eine perspektivische Darstellung eines Teilausschnitts eines Ausführungsbeispiels eines erfindungsgemäßen Haushaltskältegeräts; und
- Fig. 4: eine perspektivische Darstellung einer Schublade des Haushaltskältegeräts gemäß Fig. 3 mit darin eingebrachten mehreren und in der Größe unterschiedlichen Lebensmittel-Aufnahmebehältern als Ausführungsbeispiele eines erfindungsgemäßen Lebensmittel-Aufnahmebehälters.

In den Figuren werden gleiche oder funktionsgleiche Elemente mit den gleichen Bezugszeichen versehen.

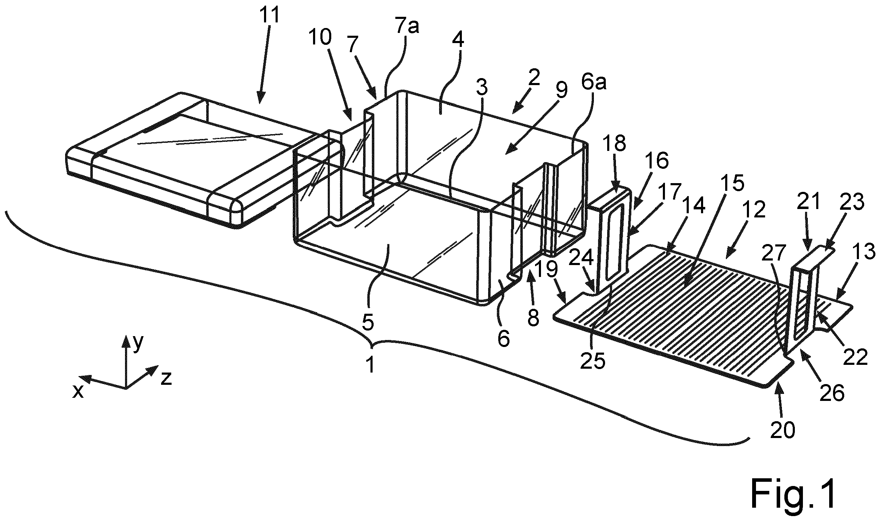

In Fig. 1 ist in einer perspektivischen Darstellung ein Ausführungsbeispiel eines Lebensmittel-Aufnahmebehälters 1 gezeigt, wobei hier die jeweiligen separaten Komponenten nebeneinander dargestellt sind. Der Lebensmittel-Aufnahmebehälter 1 ist zur Aufnahme unterschiedlichster Lebensmittel und somit Lagergüter ausgebildet. Er umfasst eine Aufnahmeschale 2, die im Ausführungsbeispiel vollständig transparent ausgebildet ist. Sie ist darüber hinaus insbesondere einstückig und aus Kunststoff hergestellt. Die Aufnahmeschale 2 weist einen Boden 3 auf, und umfasst darüber hinaus Seitenwände 4, 5, die einander gegenüberliegend sind, sowie weitere Seitenwände 6 und 7. Auch die Seitenwände 6 und 7 sind einander gegenüberliegend.

Nach oben hin ist die Aufnahmeschale 2 offen.

An der Seitenwand 6 ist eine Einkerbung 8 ausgebildet, die sich im Ausführungsbeispiel über die gesamte Höhe (y-Richtung) der Seitenwand 6 erstreckt. Die Einkerbung 8 ist eine Vertiefung, die einem Aufnahmevolumen 9 der Aufnahmeschale 2 zugewandt ist, und zu der gegenüberliegenden Seitenwand 7 hin eingebaucht ist.

In einer Horizontalschnittdarstellung (x-z-Ebene) und somit auch bei einer Betrachtung von oben (in negativer y-Richtung) ist die Einkerbung 8 trapezförmig ausgebildet.

In entsprechender Ausgestaltung ist auch in der gegenüberliegenden Seitenwand 7 eine entsprechende Einkerbung 10 ausgebildet, die bezüglich der Maße und der Formgebung gleich zu der Einkerbung 8 gestaltet ist. Die Einkerbung 10 ist somit nach innen gebaucht und somit der gegenüberliegenden Seitenwand 6 zugewandt gestaltet.

Darüber hinaus umfasst der Lebensmittel-Aufnahmebehälter 1 einen Deckel 11, der hier plattenartig gestaltet ist und zumindest bereichweise transparent ausgebildet ist.

Des Weiteren weist der Lebensmittel-Aufnahmebehälter 1 einen zur Aufnahmeschale 2 und dem dazu separaten Deckel 11 einen separaten Einsatz 12 auf. Der Einsatz 12 umfasst einen Boden 13, der plattenförmig ausgestaltet ist. Der Boden 13 weist einen Bereich 14 auf, der Durchbrüche 15, im Ausführungsbeispiel in Form von Schlitzen bzw. parallelen Linien, aufweist.

Darüber hinaus umfasst der Einsatz 12 einen ersten Bügel 16, der sich von dem Boden 13 nach oben erstreckt. Der Bügel 16 umfasst einen Bügelstamm 17, der sich geradlinig nach oben erstreckt. An dem dem Boden 13 abgewandten Ende des Bügelstamms 17 ist ein Griff 18 ausgebildet, der sich aus der Ebene des Bügelstamms 17 herauserstreckt und horizontal nach außen orientiert ist. In einem Vertikalschnitt und somit in einer x-y-Ebene weist der Bügel 16 eine umgedrehte L-Form auf. Der kurze L-Schenkel wird dabei durch den Griff 18 gebildet. In entsprechender Ausgestaltung ist an einem zu diesem Rand 19 des Bodens 13 gegenüberliegenden Rand 20 des Bodens 13 ein weiterer Bügel 21 ausgebildet, der hier ebenfalls wiederum baugleich zu dem Bügel 16 gestaltet ist. Auch dieser weist einen Bügelstamm 22 und einen davon seitlich bzw. horizontal nach außen kragenden Griff 23 auf. Der Griff 23 ist zur Seite hin und somit dem gegenüberliegenden Bügel 16 abgewandt orientiert. Entsprechend ist auch der Griff 18 zu dem Bügel 21 abgewandt orientiert.

Der Einsatz 12 ist vorzugsweise als einstückiges Kunststoffbauteil ausgebildet.

Wie in der Darstellung gemäß Fig. 1 zu erkennen ist, ist an diesem Rand 19 ebenfalls eine Einkerbung 24 ausgebildet, die nach außen und somit zur Seite hin offen ausgebildet ist. In einer Projektionsbetrachtung und somit von oben betrachtet ist diese Einkerbung 24 ebenfalls trapezartig gebildet. Der Bügelstamm 17 erstreckt sich von einem geradlinigen Randabschnitt 25 dieser Trapezform nach oben. Es ist vorgesehen, dass die Formgebung der Einkerbung 24 an die Formgebung der Einkerbung 10 angepasst ist, so dass beim Einsetzen des Einsatzes 12 in die Aufnahmeschale 2 dadurch auch eine gewisse Führung durch die ineinandergreifenden und korrespondierenden Einkerbungen 24 und 10 gebildet ist. Entsprechend ist auch auf der gegenüberliegenden Seite bzw. am Rand 20 eine Einkerbung 26 ausgebildet, die ebenfalls trapezförmig ist, wobei auch hier von einem geradlinigen oberen Randabschnitt 27 sich der Bügelstamm 22 nach oben erstreckt. Auch hier ist dann eine korrespondierende Formgebung und somit ein Ineinandergreifen der Einkerbungen 8 und 26 ermöglicht, so dass auch hier eine entsprechende Führung beim Einsetzen und Herausnehmen des Einsatzes 12 erreicht ist.

Wie darüber hinaus zu erkennen ist, weisen die Bügelstämme 17 und 22 jeweils Durchbrechungen auf, so dass hier Material eingespart werden kann und dennoch die Stabilität ausreichend hoch ist. Dadurch wird das Gewicht des Einsatzes 12 reduziert.

Die Bügel 16 und 21 können als starre, enge und unveränderliche Komponenten ausgebildet sein. Sie können jedoch auch in sich selbst längenveränderlich sein, und somit in y-Richtung länger oder kürzer eingestellt werden.

Im eingesetzten Zustand des Einsatzes 12 in die Aufnahmeschale 2 überkragt der Griff 18 die nach oben hin offene Einkerbung 10 und der Griff 23 überkragt bzw. überdeckt von oben die ebenfalls nach oben offene Einkerbung 8. Insbesondere liegen die Griffe 18 und 23 auf einem oberen Rand 7a bzw. einem oberen Rand 6a der Seitenwände 6 und 7 auf. Durch seitliches Eingreifen in die Einkerbungen 8 und 10 können die Griffe 18 und 23 daher von unten ergriffen werden bzw. ihre Unterseiten mit Fingern kontaktiert werden und somit ein einfaches Anheben des Einsatzes 12 relativ zur Aufnahmeschale 2 erreicht werden.

In x-Richtung und somit horizontal nach außen hin erstrecken sich die Griffe 18 und 23, jeweils ausgehend von den Anbindungsstellen an die Bügelstämme 17 und 22 vorzugsweise maximal über ein Ausmaß, welches dem in dieser x-Richtung bemessenen Ausmaß der Einkerbung 8 bzw. 10 zu den benachbarten, nicht eingebauchten Außenseiten der Seitenwände 6 und 7 entspricht. Dadurch wird ein seitliches Nachaußenüberstehen der Griffe 18 und 23 über die Seitenwände 6 und 7 vermieden. Es kann jedoch auch vorgesehen sein, dass sich die Griffe 18 und 23 soweit zur Seite hin erstrecken, bis sie gerade noch von dem Deckel 11 von oben abdeckt sind, so dass der Deckel 11 in der x-z-Ebene das maximale Ausmaß darstellt.

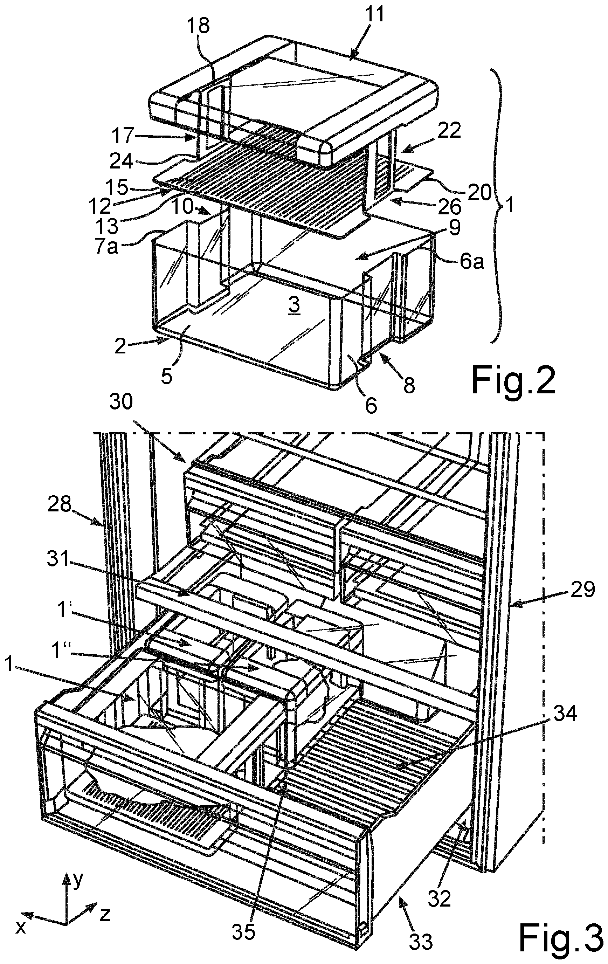

In Fig. 2 sind die in Fig. 1 gezeigten Komponenten übereinander angeordnet gezeigt und in einer Explosionsdarstellung des Lebensmittel-Aufnahmebehälters 1 gezeigt.

In Fig. 3 ist in einer perspektivischen Darstellung ein Teilbereich eines Haushaltskältegeräts 28 gezeigt. Dieses umfasst ein Gehäuse 29, in dem ein Aufnahmeraum 30 für Lebensmittel ausgebildet ist, der insbesondere durch Wände eines Innenbehälters begrenzt ist. Der Aufnahmeraum 30 ist frontseitig durch eine nicht gezeigte Tür verschließbar. In dem Aufnahmeraum 30 ist beispielhaft ein Fachboden 31 angeordnet. Dadurch wird der Aufnahmeraum 30 in Teilvolumen separiert. In einem dazu unteren Teilvolumen 32 ist eine Aufnahmeschale als Schublade 33 angeordnet, die somit in Tiefenrichtung und somit in z-Richtung des Haushaltskältegeräts 28 verschoben werden kann. Die Schublade 33 ist nach oben hin offen und weist ein Aufnahmevolumen 34 auf. Wie in Fig. 3 zu erkennen ist, ist der Lebensmittel-Aufnahmebehälter 1, wie er in Fig. 1 und Fig. 2 erläutert wurde, in dieser Schublade 33 eingesetzt angeordnet.

Es ist darüber hinaus in Fig. 3 auch zu erkennen, dass hier ein System 35 mit einer Mehrzahl von separaten derartigen Lebensmittel-Aufnahmebehältern 1 in dem Aufnahmevolumen 34 angeordnet ist. In dem Zusammenhang sind dann hier noch weitere Lebensmittel-Aufnahmebehälter 1' und 1" angeordnet, wobei die Lebensmittel-Aufnahmebehälter 1, 1' und 1" unterschiedliche Größen und somit unterschiedliche Aufnahmevolumina aufweisen.

Wie darüber hinaus auch zu erkennen ist, sind die Größen dieser Lebensmittel-Aufnahmebehälter 1, 1' und 1" so definiert gebildet bzw. vorgegeben, dass das Aufnahmevolumen 34 in Tiefenrichtung und somit in z-Richtung passgenau ausgefüllt ist.

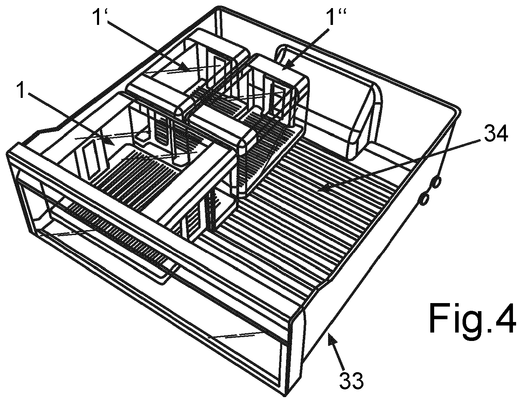

Dies ist in der perspektivischen Darstellung der Schublade 33 in Fig. 4 nochmals gezeigt. Ein unerwünschtes hin und her Rutschen dieser Lebensmittel-Aufnahmebehälter 1, 1' und 1" ist dadurch vermieden. Entsprechend kann das restliche Volumen des Aufnahmevolumens 34 zur Seite hin dann auch noch mit entsprechend ausgestalteten Lebensmittel-Aufnahmebehältern aufgefüllt werden, die aufgrund ihren abgestimmten Standardgrößen dann auch das restliche Volumen passgenau auffüllen können.

### Bezugszeichenliste

- 1: Lebensmittel-Aufnahmebehälter
- 1': Lebensmittel-Aufnahmebehälter
- 1": Lebensmittel-Aufnahmebehälter
- 2: Aufnahmeschale
- 3: Boden
- 4: Seitenwand
- 5: Seitenwand
- 6: Seitenwand
- 6a: oberer Rand
- 7: Seitenwand
- 7a: oberer Rand
- 8: Einkerbung
- 9: Aufnahmevolumen
- 10: Einkerbung
- 11: Deckel
- 12: Einsatz
- 13: Boden
- 14: Bereich
- 15: Durchbruch
- 16: Bügel
- 17: Bügelstamm
- 18: Griff
- 19: Rand
- 20: Rand
- 21: Bügel
- 22: Bügelstamm
- 23: Griff
- 24: Einkerbung
- 25: Randabschnitt
- 26: Einkerbung
- 27: Randabschnitt
- 28: Haushaltskältegerät
- 29: Gehäuse
- 30: Aufnahmeraum
- 31: Fachboden
- 32: Teilvolumen
- 33: Schublade
- 34: Aufnahmevolumen
- 35: System

## Patentansprüche

1. Lebensmittel-Aufnahmebehälter (1, 1', 1") mit einer Aufnahmeschale (2), einem separaten Deckel (11) und einem separaten Einsatz (12), der zum Einsetzen in die Aufnahmeschale (2) ausgebildet ist und welcher einen Boden (13) aufweist, auf welchen ein Lebensmittel auflegbar ist, wobei der Einsatz (12) zumindest einen vom Boden (13) nach oben ragenden Bügel (16, 21) aufweist, der an seinem dem Boden (13) abgewandten oberen Ende einen Griff (18, 23) aufweist, wobei der Griff (18, 23) im in die Aufnahmeschale (2) eingesetzten Zustand des Einsatzes (12) über einen oberen Rand (6a, 7a) der Aufnahmeschale (2) nach außen überkragt, **dadurch gekennzeichnet, dass** der Boden (13) des Einsatzes (12) an einem Rand (19, 20) eine nach außen offene Einkerbung (24, 26) aufweist, und der Bügel (16, 21) von einem die Einkerbung (24, 26) begrenzenden Randabschnitt (25, 27) nach oben ragt, und die Aufnahmeschale (2) an einer Seitenwand (6, 7) eine Einkerbung (8, 10) aufweist, die sich in Höhenrichtung betrachtet von dem oberen Rand (6a, 7a) der Aufnahmeschale (2) über zumindest 50%, insbesondere zumindest 80%, insbesondere zumindest 90% der Höhe der Seitenwand (6, 7) erstreckt, wobei die Formgebung der Einkerbung (24, 26) des Bodens (13) an die Formgebung der Einkerbung (8, 10) an der Seitenwand (6, 7) angepasst ist, sodass beim Einsetzen des Einsatzes (12) in die Aufnahmeschale (2) dadurch auch eine gewisse Führung durch die ineinandergreifenden und korrespondierenden Einkerbungen (8, 10, 24, 26) gebildet ist, wobei die Einkerbung (8, 10) in der Seitenwand (6, 7) nach oben offen ausgebildet ist und im eingesetzten Zustand des Einsatzes (12) in die Aufnahmeschale (2) der Griff (18, 23) die nach oben hin offene Einkerbung (8, 10) in der Seitenwand (6, 7) überkragt.

2. Lebensmittel-Aufnahmebehälter (1, 1', 1") nach Anspruch 1, **dadurch gekennzeichnet, dass** der Bügel (16, 21) als umgedrehtes L geformt ist, insbesondere der Griff (18, 23) durch den kurzen L-Schenkel gebildet ist.

3. Lebensmittel-Aufnahmebehälter (1, 1', 1") nach Anspruch 1 oder 2 , **dadurch gekennzeichnet, dass** die Einkerbung (24, 26) des Bodens (13) trapezförmig ausgebildet ist, und der Randabschnitt (25, 27) ein Dach des Trapezes bildet.

4. Lebensmittel-Aufnahmebehälter (1, 1', 1") nach einem der vorhergehenden Ansprüche, **dadurch gekennzeichnet, dass** im eingesetzten Zustand des Einsatzes (12) in die Aufnahmeschale (2) der Griff (18, 23) die Einkerbung (8, 10) der Aufnahmeschale (2) von oben übergreifend angeordnet ist.

5. Lebensmittel-Aufnahmebehälter (1, 1', 1") nach einem der vorhergehenden Ansprüche, **dadurch gekennzeichnet, dass** der Deckel (11) im auf der Aufnahmeschale (2) aufgebrachten Zustand den Griff (18, 23) zumindest bereichsweise überlappt.

6. Lebensmittel-Aufnahmebehälter (1, 1', 1") nach einem der vorhergehenden Ansprüche, **dadurch gekennzeichnet, dass** der Griff (18, 23) im eingesetzten Zustand des Einsatzes (12) in die Aufnahmeschale (2) auf dem oberen Rand (6a, 7a) der Aufnahmeschale (2) aufsitzt.

7. Lebensmittel-Aufnahmebehälter (1, 1', 1") nach einem der vorhergehenden Ansprüche, **dadurch gekennzeichnet, dass** der Deckel (11) und/oder die Aufnahmeschale (2) zumindest bereichsweise transparent ausgebildet sind.

8. Lebensmittel-Aufnahmebehälter (1, 1', 1") nach einem der vorhergehenden Ansprüche, **dadurch gekennzeichnet, dass** der Einsatz (12) den Boden (13) und an gegenüberliegenden Rändern (19, 20) jeweils einen Bügel (16, 21) aufweist.

9. Lebensmittel-Aufnahmebehälter (1, 1', 1") nach einem der vorhergehenden Ansprüche, **dadurch gekennzeichnet, dass** der Boden (13) des Einsatzes (12) zumindest bereichsweise mit Durchbrüchen (15) ausgebildet ist und zumindest der Bereich (14) des Bodens (13) mit diesen Durchbrüchen (15) ist im eingesetzten Zustand des Einsatzes (12) in die Aufnahmeschale (2) beabstandet zu einem Boden (3) der Aufnahmeschale (2) angeordnet.

10. Lebensmittel-Aufnahmebehälter (1, 1', 1") nach einem der vorhergehenden Ansprüche, **dadurch gekennzeichnet, dass** der Einsatz (12) einstückig aus Kunststoff ausgebildet ist.

11. Haushaltskältegerät (28) mit zumindest einem Lebensmittel-Aufnahmebehälter (1, 1', 1") nach einem der vorhergehenden Ansprüche.

## Claims

1. Food container (1, 1', 1") with a receiving tray (2), a separate cover (11) and a separate insert (12), which is embodied for insertion into the receiving tray (2) and which has a base (13), on which a food can be placed, wherein the insert (12) has at least one bracket (16, 21) which projects upward from the base (13) and which has a handle (18, 23) on its upper end facing away from the base (13), wherein the handle (18, 23) protrudes outward when the insert (12) is inserted into the receiving tray (2) across an upper edge (6a, 7a) of the receiving tray (2), **characterised in that** the base (13) of the insert (12) has an outwardly open notch (24, 26) on an edge (19, 20), and the bracket (16, 21) projects upwards from an edge section (25, 27) bounding the notch (24, 26) and the receiving tray (2) has a notch (8, 10) on a side wall (6, 7), said notch, viewed in the height direction, extending from the top edge (6a, 7a) of the receiving tray (2) across at least 50%, in particular at least 80%, in particular at least 90% of the height of the side wall (6, 7), wherein the moulding of the notch (24, 26) of the base (13) is adjusted to the moulding of the notch (8, 10) on the side wall (6, 7), so that when the insert (12) is inserted into the receiving tray (2), a specific guide is as a result also formed by the intermeshing and corresponding notches (8, 10, 24, 26), wherein the notch (8, 10) in the side wall (6, 7) is embodied to open upward and when the insert (12) is inserted into the receiving tray (2) of the handle (18, 23), the upwardly open notch (8, 10) protrudes into the side wall (6, 7).

2. Food container (1, 1', 1") according to claim 1, **characterised in that** the bracket (16, 21) is formed as a reverse L, in particular the handle (18, 23) is formed by the short L-limb.

3. Food container (1, 1', 1") according to claim 1 or 2, **characterised in that** the notch (24, 26) of the base (13) is embodied to be trapezoidal, and the edge section (25, 27) forms a roof of the trapeze.

4. Food container (1, 1', 1") according to one of the preceding claims, **characterised in that** when the insert (12) is inserted into the receiving tray (2) of the handle (18, 23), the notch (8, 10) of the receiving tray (2) is arranged to protrude upward.

5. Food container (1, 1', 1") according to one of the preceding claims, **characterised in that** when the cover (11) is attached to the receiving tray (2), it overlaps the handle (18, 23) at least in regions.

6. Food container (1, 1', 1") according to one of the preceding claims, **characterised in that** when the insert (12) is inserted into the receiving tray (2), the handle (18, 23) rests on the upper edge (6a, 7a) of the receiving tray (2).

7. Food container (1, 1', 1") according to one of the preceding claims, **characterised in that** the cover (11) and/or the receiving tray (2) are embodied to be transparent at least in regions.

8. Food container (1, 1', 1") according to one of the preceding claims, **characterised in that** the insert (12) has the base (13) and on opposing edges (19, 20) a bracket (16, 21) in each case.

9. Food container (1, 1', 1") according to one of the preceding claims, **characterised in that** the base (13) of the insert (12) is embodied with openings (15) at least in regions, and at least the region (14) of the base (13) with these openings (15) is arranged at a distance from the base (3) of the receiving tray (2) when the insert (12) is inserted into the receiving tray (2).

10. Food container (1, 1', 1") according to one of the preceding claims, **characterised in that** the insert (12) is embodied in one piece made from plastic.

11. Household refrigeration appliance (28) with at least one food container (1, 1', 1") according to one of the preceding claims.

## Revendications

1. Récipient de stockage pour produit alimentaire (1, 1', 1") avec un bac de stockage (2), un couvercle séparé (11) et une pièce à insérer séparée (12) qui est réalisée pour être insérée dans le bac de stockage (2) et qui présente un fond (13) sur lequel un produit alimentaire peut être déposé, dans lequel la pièce à insérer (12) présente au moins un étrier (16, 21) faisant saillie vers le haut à partir du fond (13), lequel étrier présente au niveau de son extrémité supérieure opposée au fond (13) un élément de préhension (18, 23), dans lequel l'élément de préhension (18, 23) surplombe vers l'extérieur à l'état inséré dans le bac de stockage (2) de la pièce à insérer (12) via un bord supérieur (6a, 7a) du bac de stockage (2), **caractérisé en ce que** le fond (13) de la pièce à insérer (12) présente au niveau d'un bord (19, 20) une fente (24, 26) ouverte vers l'extérieur, et l'étrier (16, 21) fait saillie vers le haut à partir d'une section de bord (25, 27) limitant la fente (24, 26), et le bac de stockage (2) présente au niveau de sa paroi latérale (6, 7) une fente (8, 10) qui, observée dans la direction de la hauteur à partir du bord supérieur (6a, 7a) du bac de stockage (2), s'étend sur au moins 50 %, en particulier au moins 80 %, en particulier au moins 90 % de la hauteur de la paroi latérale (6, 7), dans lequel la conception de la fente (24, 26) du fond (13) est adaptée à la conception de la fente (8, 10) au niveau de la paroi latérale (6, 7), de telle sorte que lors de l'insertion de la pièce à insérer (12) dans le bac de réception (2) ce faisant également un certain guidage est formé par le biais des fentes (8, 10, 24, 26) correspondantes et se mettant en prise les unes dans les autres, dans lequel la fente (8, 10) dans la paroi latérale (6, 7) est réalisée ouverte vers le haut et à l'état inséré de la pièce à insérer (12) dans le bac de stockage (2) l'élément de préhension (18, 23) surplombe la fente ouverte vers le haut (8, 10) dans la paroi latérale (6, 7).

2. Récipient de stockage pour produit alimentaire (1, 1', 1") selon la revendication 1, **caractérisé en ce que** l'étrier (16, 21) est formé en tant que L retourné, en particulier l'élément de préhension (18, 23) est formé par le biais de la branche de L courte.

3. Récipient de stockage pour produit alimentaire (1, 1', 1") selon la revendication 1 ou 2, **caractérisé en ce que** la fente (24, 26) du fond (13) est réalisée en forme de trapèze et la section de bord (25, 27) forme un toit du trapèze.

4. Récipient de stockage pour produit alimentaire (1, 1', 1") selon l'une des revendications précédentes, **caractérisé en ce que**, à l'état inséré de la pièce à insérer (12) dans le bac de stockage (2) l'élément de préhension (18, 23) est disposé en empiétant sur le dessus de la fente (8, 10) du bac de stockage (2).

5. Récipient de stockage pour produit alimentaire (1, 1', 1") selon l'une des revendications précédentes, **caractérisé en ce que** le couvercle (11) chevauche l'élément de préhension (18, 23) au moins par endroits à l'état posé sur le bac de stockage (2).

6. Récipient de stockage pour produit alimentaire (1, 1', 1") selon l'une quelconque des revendications précédentes, **caractérisé en ce que** l'élément de préhension (18, 23) repose à l'état inséré de la pièce à insérer (12) dans le bac de stockage (2) sur le bord supérieur (6a, 7a) du bac de stockage (2).

7. Récipient de stockage pour produit alimentaire (1, 1', 1") selon l'une quelconque des revendications précédentes, **caractérisé en ce que** le couvercle (11) et/ou le bac de stockage (2) sont réalisés de manière transparente au moins par endroits.

8. Récipient de stockage pour produit alimentaire (1, 1', 1") selon l'une quelconque des revendications précédentes, **caractérisé en ce que** la pièce à insérer (12) présente le fond (13) et respectivement un étrier (16, 21) au niveau de bords opposés (19, 20).

9. Récipient de stockage pour produit alimentaire (1, 1', 1") selon l'une quelconque des revendications précédentes, **caractérisé en ce que** le fond (13) de la pièce à insérer (12) est réalisé au moins par endroits avec des percées (15) et au moins la zone (14) du fond (13) avec ces percées (15) est, à l'état inséré de la pièce à insérer (12), disposée dans le bac de stockage (2) à distance d'un fond (3) du bac de stockage (2).

10. Récipient de stockage pour produit alimentaire (1, 1', 1") selon l'une des revendications précédentes, **caractérisé en ce que** la pièce à insérer (12) est réalisée d'un seul tenant à partir d'une matière plastique.

11. Appareil frigorifique électroménager (28) avec au moins un récipient de stockage pour produit alimentaire (1, 1', 1") selon l'une des revendications précédentes.
